# EUROPEAN PATENT APPLICATION

(11) **EP 4 787 473 A1**
(43) Date of publication of application: **05.08.2026**
(21) Application number: 25731943.4
(22) Date of filing: 20.01.2025
(51) Int. Cl.: H01M 4/36

(54) **POSITIVE ELECTRODE COMPOSITE MATERIAL AND PREPARATION METHOD THEREFOR, POSITIVE ELECTRODE SHEET AND BATTERY**

(30) Priority: 23.10.2024 CN 202411490271
(71) Applicant: Eve Power Co., Ltd., Jingmen, Hubei 448000 (CN)
(72) Inventor: ZHAO, Zhenshuai, Jingmen, Hubei 448000 (CN); HUANG, Chengjie, Jingmen, Hubei 448000 (CN); ZHU, Weihua, Jingmen, Hubei 448000 (CN); WEI, Haitao, Jingmen, Hubei 448000 (CN)
(74) Representative: HGF
(86) International application number: PCT/CN2025/073261
(87) International publication number: WO 2026/086039

(57) **Abstract**

The present application provides a cathode composite material, a preparation method therefor, a cathode plate and a battery; the cathode composite material includes a first cathode active material and a second cathode active material; the first cathode active material includes a ternary material and a hydrophobic group, and the hydrophobic group is connected to the ternary material through a chemical bond; in the same humidity condition, the ratio of the weight change rate of the first cathode active material to the weight change rate of the second cathode active material is more than or equal to 0.95 and less than or equal to 1.05. In the present application, by introducing the hydrophobic group into the ternary material, the poor electrochemical stability of the cathode composite material caused by large sensitivity discrepancy of different cathode active materials to moisture can be relieved.

## Description

This application claims priority to Chinese Patent Application No. 202411490271.X filed with CNIPA on October 23, 2024, the disclosure of which is incorporated herein by reference in its entirety.

### TECHNICAL FIELD

The present application relates to the technical field of batteries, and specifically relates to a cathode composite material, a preparation method therefor, a cathode plate and a battery.

### BACKGROUND

In recent years, with the rapid development of new energy technology, the research and development of power batteries is also in full swing, which is gradually focused on the development of battery materials having high energy density. Lithium manganese iron phosphate (LMFP) and ternary (NCM) materials can complement each other and the new material compounded by LMFP and NCM has a further improved energy density. On the one hand, the NCM material can improve the defects of insufficient intrinsic conductivity of the LMFP material, and on the other hand, the introduction of LMFP material can improve the thermal stability of the NCM material. Therefore, the material composed of LMFP material and NCM material has become an emerging cathode material for lithium-ion batteries with great market prospects.

### TECHNICAL PROBLEM

Due to the inconsistency of the sensitivity of LMFP and NCM material to moisture, the water requirements of these two materials are different when used separately. However, when LMFP material is mixed with NCM material, different moisture sensitivities will lead to poor consistency between the LMFP material and NCM material, which will affect the electrochemical stability of the composite material, thereby affecting the cycling and storage properties of the battery.

### TECHNICAL SOLUTION

An embodiment of the present application provides a cathode composite material, a preparation method therefor, a cathode plate and a battery, and the poor electrochemical stability of the cathode composite material caused by large sensitivity discrepancy of different cathode active materials to moisture can be relieved.

In a first aspect, an embodiment of the present application provides a cathode composite material, which includes a first cathode active material and a second cathode active material, wherein the first cathode active material includes a ternary material and a hydrophobic group, and the hydrophobic group is connected to the ternary material through a chemical bond;
wherein, in the same humidity condition, a ratio of a weight change rate of the first cathode active material to a weight change rate of the second cathode active material is more than or equal to 0.95 and less than or equal to 1.05.

In a second aspect, an embodiment of the present application provides a preparation method for a cathode composite material, which includes:
forming a hydrophobic group on a ternary material to obtain a first cathode active material, wherein the hydrophobic group is connected to the ternary material through a chemical bond; and
mixing at least the first cathode active material and a second cathode active material to obtain the cathode composite material; wherein, in the same humidity condition, a ratio of a weight change rate of the first cathode active material to a weight change rate of the second cathode active material is more than or equal to 0.95 and less than or equal to 1.05.

In a third aspect, an embodiment of the present application provides a cathode plate, which includes a cathode current collector and a cathode active layer disposed on at least one side of the cathode current collector, wherein a material of the cathode active layer includes the above cathode composite material.

In a fourth aspect, an embodiment of the present application provides a battery, and the battery includes the above cathode plate.

### BENIFICIAL EFFECTS

An embodiment of the present application provides a cathode composite material, a preparation method therefor, a cathode plate and a battery; by introducing the hydrophobic group into the ternary material to obtain the first cathode active material, the sensitivity to moisture of the first cathode active material tends to be consistent with the second cathode active material, so that the chemical activity of the first cathode active material is consistent with the second cathode active material in the same condition, and thus the electrochemical stability of the cathode composite material can be improved. In a case where the cathode composite material is applied to the cathode plate of a battery, the cycling and storage performance of the cell can be improved. Therefore, in the present application, the poor electrochemical stability of the cathode composite material caused by large sensitivity discrepancy of different cathode active materials to moisture can be relieved.

Other aspects will be appreciated upon reading and understanding the drawings and detailed description.

### BRIEF DESCRIPTION OF DRAWINGS

Fig. 1 is a flow chart of a preparation method for a cathode composite material provided by an embodiment of the present application;
Fig. 2 is a schematic structural diagram of a cathode plate provided by an embodiment of the present application;
Fig. 3 is a schematic structural diagram of another cathode plate provided by an embodiment of the present application; and
Fig. 4 is a schematic structural diagram of a battery provided by an embodiment of the present application.

### DESCRIPTION OF THE PRESENT APPLICATION

The technical solutions of the embodiments in the present application are further described below in combination of accompanying drawings in embodiments of the present application. It is obvious that the described embodiments are only part of the embodiments of the present application instead of all embodiments. In addition, it should be understood that the embodiments described here are merely used for illustrating and explaining the present application and should not be regarded as a specific limitation to the present application. In the present application, in the absence of a statement to the contrary, the orientation words such as "up" and "down" usually refer to the upward and downward orientations of the installation in actual use or working conditions, specifically, the direction of the drawing surface in the accompanying drawings; the "inside" and "outside" are relative to the contours of the installation.

Because the NCM material having a layered structure is more sensitive to moisture than the LMFP material, the NCM material is easier to undergo chemical reactions after contacting with water. For example, the material reacts with water to produce hydroxides and other substances, which will affect the performance of the material and the electrochemical performance of the battery, and thus may lead to the capacity attenuation and the reduction of cycling lifetime of the battery. In addition, for the high-nickel NCM material, high nickel content tends to cause safety risks such as thermal runaway. The LMFP material has an olivine structure, which is relatively stable, and is less sensitive to moisture than the NCM material. Therefore, the thermal stability of the material formed by compounding the NCM material and the LMFP material can be improved.

However, due to the inconsistent sensitivity of NCM material and LMFP material to moisture, the two materials will undergo side reactions to different extents in the same condition; if the composite of NCM material and LMFP material is used for a long term, the difference between the chemical activities of the two materials will become increasingly larger, resulting in the electrochemical stability of the composite material becoming increasingly worse, that is, losing the composite advantage.

The present application provides a cathode composite material, a preparation method therefor, a cathode plate and a battery, and see the following description of embodiments for details.

An embodiment of the present application provides a cathode composite material, which includes a first cathode active material and a second cathode active material; the first cathode active material includes a ternary material and a hydrophobic group, and the hydrophobic group is connected to the ternary material through a chemical bond.

In the same humidity condition, the ratio of the weight change rate of the first cathode active material to the weight change rate of the second cathode active material is more than or equal to 0.95 and less than or equal to 1.05.

In some embodiments, the sensitivity of a substance to water can be assessed by the weight change method. Specifically, the weight change of a substance is measured in different humidity conditions to determine its sensitivity to moisture. When a substance is exposed to an environment that contains a certain amount of moisture, the substance will absorb or soak up moisture, resulting in an increase in weight. By monitoring the weight changes, the absorption capacity and sensitivity to water of a substance can be assessed.

In some embodiments, the measurement method for weight change rate includes the following steps.
(1) The substance to be tested is dried at a certain temperature to constant weight to remove the moisture possibly contained inside and to guarantee the substance having consistent initial state.
(2) Setting different humidity conditions: a humidity control device, for example, a constant temperature and humidity chamber, is used to provide different levels of relative humidity, for example, 10%, 30%, 50%, or 70%.
(3) Settling the sample and weighing: the dried samples are settled in different humidity conditions, respectively, and after a certain time (for example, 24 h or 48h), the samples are taken out and weighed rapidly, and the weight of the sample in each humidity condition is recorded.
(4) Calculating the weight change rate: the weight change rates are calculated according to weight changes of the samples at different humidity, and weight change rate = (weight after moisture absorption - initial weight) / initial weight × 100%.

It is understood that the weight change rate A of the first cathode active material and the weight change rate B of the second cathode active material can be measured by using the above measurement method for weight change rate in an embodiment of the present application, and the ratio of A and B (A/B) satisfies 0.95 ≤ A/B ≤ 1.05.

By introducing the hydrophobic group into the ternary material to obtain the first cathode active material in an embodiment of the present application, the sensitivity to moisture of the first cathode active material tends to be consistent with the second cathode active material, so that the chemical activity of the first cathode active material is consistent with the second cathode active material in the same condition, and thus the electrochemical stability of the cathode composite material can be improved. In a case where the cathode composite material is applied to the cathode plate of a battery, the cycling and storage performance of the cell can be improved.

In some embodiments, the hydrophobic group includes at least one, but is not limited to, a hydrocarbon group, a fatty acid group, an aromatic group, and a halogenated hydrocarbon group. By introducing these types of hydrophobic groups into the ternary material, the sensitivity of the first cathode active material to moisture can be reduced, so that the sensitivity of the first cathode active material to moisture is comparable to the second cathode active material and there is no negative influence on the ternary material.

In one embodiment, the hydrophobic group is selected from an oleic acid group. In other embodiments, the hydrophobic group can be selected from other hydrophobic groups; the oleic acid group is used as an example for illustration in an embodiment of the present application.

In some embodiments, the hydrophobic group can be introduced to the raw materials (for example, the nickel source, the cobalt source, and the manganese source) of the ternary material to prepare the ternary material containing the hydrophobic group.

In some embodiments, the hydrophobic group is directly bonded with the raw materials of the ternary material through a chemical bond. For example, in a case where the hydrophobic group is an oleic acid group, the nickel source of the ternary material can be selected from nickel oleate ((C₁₇H₃₃COO)₂Ni), so that the nickel source contains a hydrophobic group.

It is understood that the chemical bond in an embodiment of the present application includes, but is not limited to, a covalent bond.

It should be noted that the hydrophobic group in an embodiment of the present application can also be bonded with the ternary material through an intermediate linking group.

In some embodiments, the hydrophobic group has a mass fraction ranging from 0.5% to 5% in the first cathode active material. For example, the hydrophobic group in the first cathode active material has a mass fraction of 0.5%, 0.8%, 1%, 1.5%, 2%, 2.5%, 3%, 3.5%, 4%, 4.5%, or 5%. By controlling the content of the hydrophobic group to the range of 0.5%-5%, the sensitivity of the ternary material to moisture can be reduced to a proper range.

In some embodiments, the ternary material includes a nickel-cobalt-manganese material, and the second cathode active material includes a lithium manganese iron phosphate material; in this case, the ternary material is abbreviated as NCM, and the second cathode active material is abbreviated as LMFP.

In an embodiment of the present application, the metal element of the ternary material is not limited to the combination of nickel element, cobalt element and manganese element, and the metal element of the second cathode active material is not limited to the combination of manganese element, iron element and lithium element. In an embodiment of the present application, the NCM and LMFP are merely used as examples for illustration.

In some embodiments, the cathode composite material further includes a conductive agent and a binder. In the cathode composite material, a sum of mass fractions of the first cathode active material and the second cathode active material ranges from 94.5% to 97%, a mass fraction of the conductive agent ranges from 1.5% to 3%, and a mass fraction of the binder ranges from 1.5% to 2.5%.

For example, in the cathode composite material, the sum of the mass fractions of the first cathode active material and the second cathode active material is 94.5%, 95%, 95.5%, 96%, 96.5%, or 97%; the mass fraction of the conductive agent is 1.5%, 1.8%, 2%, 2.2%, 2.5%, 2.8%, or 3%; the mass fraction of the binder is 1.5%, 1.8%, 2%, 2.2%, or 2.5%.

In some embodiments, the cathode composite material further includes a solvent, and the solvent is selected from, but not limited to, N-methyl-2-pyrrolidone (abbreviated as NMP).

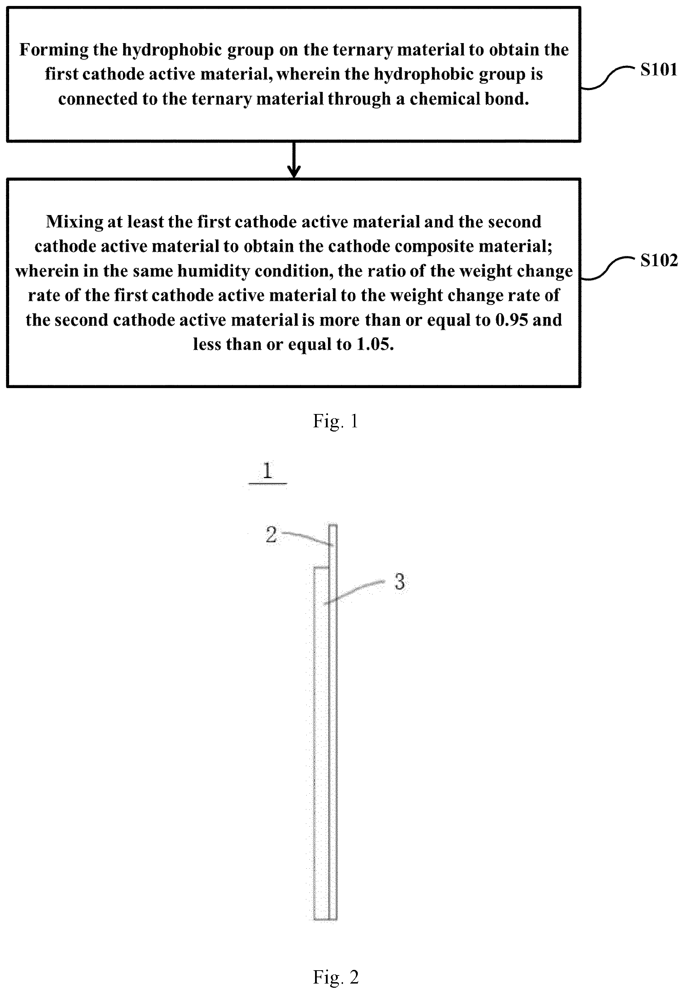

As shown in Fig. 1, an embodiment of the present application provides a preparation method for the cathode composite material in the aforementioned embodiment, and steps of the preparation method include S101 and S102.

S101: Forming the hydrophobic group on the ternary material to obtain the first cathode active material, wherein the hydrophobic group is connected to the ternary material through a chemical bond.

Specifically, the step S101 includes the following steps:
mixing and dissolving a nickel source, a cobalt source, and a manganese source according to a preset ratio to obtain a mixed salt solution, adding a precipitant to the mixed salt solution and stirring evenly at a first preset temperature, slowly adding a complexant dropwise to the mixed solution during the stirring process, allowing to stand and then washing and removing impurities to obtain a ternary material precursor; wherein at least one of the nickel source, the cobalt source and the manganese source is connected with the hydrophobic group through a chemical bond; and
drying the ternary material precursor at a second preset temperature, and then calcinating the ternary material precursor at a third preset temperature to obtain the first cathode active material.

In one embodiment, the nickel source is selected from nickel oleate, the cobalt source is selected from cobaltous nitrate, and the manganese source is selected from cobalt sulfate. In addition, the nickel source has a mass fraction ranging from 50% to 80%, the cobalt source has a mass fraction ranging from 10% to 20%, the manganese source has a mass fraction ranging from 10% to 30%, and the sum of the mass fractions of the nickel source, the cobalt source and the manganese source is 100%.

In one embodiment, nickel oleate, cobaltous nitrate and manganese sulfate are dissolved in deionized water according to the stoichiometric ratio of the target ternary material to prepare the mixed salt solution, and the concentration of the mixed salt solution is controlled within 0.5 mol/L to 2.0 mol/L.

For example, the concentration of the mixed salt solution is 0.5 mol/L, 0.8 mol/L, 1.0 mol/L, 1.2 mol/L, 1.5 mol/L, 1.8 mol/L, or 2.0 mol/L.

In one embodiment, the precipitant is selected from a sodium hydroxide solution, and the concentration of the sodium hydroxide solution ranges from 5 mol/L to 10 mol/L.

For example, the concentration of the sodium hydroxide solution is 5 mol/L, 6 mol/L, 7 mol/L, 8 mol/L, 9 mol/L, or 10 mol/L.

In one embodiment, the complexant is selected from aqueous ammonia, and the concentration of the aqueous ammonia is 2-6 mol/L.

For example, the concentration of the aqueous ammonia is 2 mol/L, 2.5 mol/L, 3 mol/L, 3.5 mol/L, 4 mol/L, 4.5 mol/L, 5 mol/L, 5.5 mol/L, or 6 mol/L.

In one embodiment, the first preset temperature ranges from 50°C to 90°C.

For example, the first preset temperature is 50°C, 60°C, 70°C, 80°C, or 90°C.

In one embodiment, the second preset temperature ranges from 80°C to 120°C, and the third preset temperature ranges from 700°C to 1000°C.

For example, the second preset temperature is 80°C, 90°C, 100°C, 110°C, or 120°C, and the third preset temperature is 700°C, 800°C, 900°C, or 1000°C.

In one embodiment, the calcination is performed for a period ranging from 5 h to 15 h.

For example, the calcination is performed for 5 h, 6 h, 7 h, 8 h, 9 h, 10 h, 11 h, 12 h, 13 h, 14 h, or 15 h.

It should be noted that the ternary material in the first cathode active material formed by calcination has a specific crystal structure, and the obtained first cathode active material can be further crushed and screened for preservation.

In one embodiment, the step S101 includes the following steps:
dissolving nickel oleate, cobaltous nitrate, and manganese sulfate in deionized water according to the stoichiometric ratio of the target ternary material to prepare a mixed salt solution, wherein the concentration of the mixed salt solution is controlled within 0.5 mol/L to 2.0 mol/L;
slowly adding a sodium hydroxide solution with a concentration ranging from 5 mol/L to 10 mol/L to the mixed salt solution under stirring, wherein the pH of the mixed salt solution is controlled within 10 to 13;
stirring the mixed salt solution at a rotational speed of 300-600 rpm and a temperature of 50-90°C, and slowly adding aqueous ammonia with a concentration ranging from 2 mol/L to 6 mol/L dropwise to the mixed salt solution to carry out a precipitation reaction;
allowing the solution to stand for 12 h to 16 h to promote the further growth and crystallization of the precipitate particles;
washing the precipitate with deionized water repeatedly and removing impurity ions to obtain a ternary material precursor; and
drying the ternary material precursor at 80-120°C to obtain precursor powder; and
calcinating the dried precursor powder in a high-temperature furnace at a controlled temperature of 700-1000°C for 5-15 h to form the first cathode active material with a specific crystal structure.

In some embodiments, the hydrophobic group has a mass fraction ranging from 0.5% to 5% in the first cathode active material. For example, the mass fraction of the hydrophobic group in the first cathode active material is 0.5%, 0.8%, 1%, 1.5%, 2%, 2.5%, 3%, 3.5%, 4%, 4.5%, or 5%.

It is understood that the content of the hydrophobic group in the ternary material can be controlled by adjusting the proportion of nickel oleate.

S102: Mixing at least the first cathode active material and the second cathode active material to obtain the cathode composite material; wherein in the same humidity condition, the ratio of the weight change rate of the first cathode active material to the weight change rate of the second cathode active material is more than or equal to 0.95 and less than or equal to 1.05.

Specifically, the weight change rates of the first cathode active material and the second cathode active material can be obtained by the aforementioned measurement method for weight change rate, which is not recited here.

In some embodiments, the second cathode active material can be selected from the cathode active material containing at least two metal elements selected from manganese element, iron element, and lithium element.

In one embodiment, the second cathode active material is selected from lithium manganese iron phosphate (LMFP).

The combination of the ternary (NCM) material and lithium manganese iron phosphate (LMFP) can effectively improve the energy density; in addition, the NCM material can address the problem of insufficient intrinsic conductivity of the LMFP material, and the LMFP material can improve the thermal stability of the NCM material. Therefore, the cathode plate made up of the material prepared by the first cathode active material and the second cathode active material is conducive to the improvement of the energy density, electrochemical stability, and thermal stability of the battery, and thereby is beneficial to the improvement of the cycling and storage performance of the battery.

Specifically, in step S102, the process of "mixing at least the first cathode active material and the second cathode active material to obtain the cathode composite material" includes the following steps:
dispersing the first cathode active material, the second cathode active material, a conductive agent and a binder in a solvent, and stirring the mixture evenly to obtain a slurry of the cathode composite material.

In some embodiments, the solvent is selected from NMP.

In some embodiments, in the cathode composite material, a sum of mass fractions of the first cathode active material and the second cathode active material ranges from 94.5% to 97%, a mass fraction of the conductive agent ranges from 1.5% to 3%, and a mass fraction of the binder ranges from 1.5% to 2.5%.

For example, in the cathode composite material, the sum of the mass fractions of the first cathode active material and the second cathode active material is 94.5%, 95%, 95.5%, 96%, 96.5%, or 97%; the mass fraction of the conductive agent is 1.5%, 1.8%, 2%, 2.2%, 2.5%, 2.8%, or 3%; the mass fraction of the binder is 1.5%, 1.8%, 2%, 2.2%, or 2.5%.

In some embodiments, the slurry of the cathode composite material is coated on at least one side of a cathode current collector, and the cathode current collector is subjected to processes such as drying and cold pressing to give the cathode plate.

It is understood that the cathode composite material provided by an embodiment of the present application can be applied to the cathode plate of a battery.

In an embodiment of the present application, by introducing the hydrophobic group into the ternary material to obtain the first cathode active material, the sensitivity to moisture of the first cathode active material tends to be consistent with the second cathode active material, so that the chemical activity of the first cathode active material is consistent with the second cathode active material in the same condition, and thus the electrochemical stability of the cathode composite material can be improved. In a case where the cathode composite material is applied to the cathode plate of a battery, the cycling and storage performance of the cell can be improved.

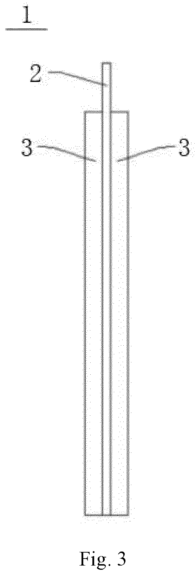

As shown in Figs. 2 and 3, an embodiment of the present application further provides a cathode plate 1, the cathode plate 1 includes a cathode current collector 2 and a cathode active layer 3 disposed on at least one side of the cathode current collector 2, and a material of the cathode active layer 3 includes the cathode composite material in the aforementioned embodiment.

In some embodiments, the slurry mixture formed by the cathode composite material in the aforementioned embodiment is coated on the surface of the cathode current collector 2, and the cathode current collector 2 is subjected to drying and rolling to form a cathode plate 1.

In some embodiments, the material of the cathode current collector 2 may be metal, for example, but not limited to, aluminum or copper.

In some embodiments, the cathode current collector 2 may have a sheet structure with two opposing surfaces, and at least one surface of the cathode current collector 2 is coated with the cathode composite material. For example, as shown in Fig. 2, one of the surfaces of the cathode current collector 2 is coated with the cathode active layer 3 formed by the cathode composite material; or, as shown in Fig. 3, the two opposing surfaces of the cathode current collector 2 are both coated with the cathode active layer 3 formed by the cathode composite material.

In some embodiments, the single-sided areal density of the cathode active layer 3 is 210-230 g/m², and the battery has good endurance when the single-sided areal density is within the above range. If the areal density is overly low, the battery capacity is small, which will lead to insufficient battery life; if the areal density is overly high, there will be a defect of insufficient dynamics, and also the manufacturing cost will rise.

In an embodiment of the present application, because the material of the cathode active layer 3 on the cathode plate 1 includes the aforementioned cathode composite material, and the first cathode active material and the second cathode active material in the cathode composite material have the similar sensitivity to moisture, the chemical activities of the first cathode active material and the second cathode active material are consistent in the same condition, which is conducive to improving the electrochemical stability of the cathode plate 1, thereby improving the cycling and storage performance of the cell employing the cathode plate 1.

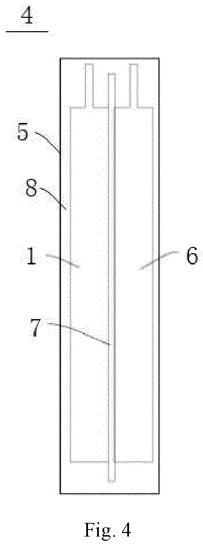

As shown in Fig. 4, an embodiment of the present application provides a battery 4, the battery 4 includes a battery shell 5, an electrolyte (not shown in the figure) in the battery shell 5, an anode plate 6, a separator 7, and the cathode plate 1 in the aforementioned embodiment.

The battery shell 5 has a cavity 8, the anode plate 6, separator 7, and cathode plate 1 are sequentially stacked and arranged in the cavity 8, and the electrolyte is contained inside the cavity 8. The material of the battery shell 5 may be metal, for example, steel or aluminium.

In some embodiments, the anode plate 6 includes an anode current collector and an anode material coated on the anode current collector, and the anode material may include graphite, a conductive agent, and a binder. The slurry mixture formed by the anode material is coated on the surface of the anode current collector, and the anode current collector is subjected to drying and rolling to form the anode plate.

In some embodiments, the battery 4 is a lithium-ion battery, but is not limited to this.

In some embodiments, the assembling process of the battery 4 includes: subjecting the cathode plate 1, anode plate 6 and separator 7 after vacuum drying to cutting, die-cutting, slitting and the like, and injecting the electrolyte at high temperature and negative pressure to assemble a prismatic aluminum shell battery.

An embodiment of the present application further provides performance tests on batteries provided by Example 1 and Comparative Examples 1 and 2, specifically the cycling performance test of the batteries. The batteries provided by Example 1, and Comparative Examples 1 and 2 have the same structure and are the batteries in the aforementioned embodiment; the only difference is the ratio (A/B) of the weight change rate A of the first cathode active material and the weight change rate B of the second cathode active material of the cathode plate.

Specifically, in the batteries provided by Example 1, and Comparative Examples 1 and 2, the first cathode active material of the cathode plate is the NCM material containing a hydrophobic group, and the second cathode active material of the cathode plate is the LMFP material.

It should be noted that the hydrophobic groups in the first cathode active materials of Example 1, and Comparative Examples 1 and 2 are the same hydrophobic group, and the only difference is the content of the hydrophobic group.

Specifically, the hydrophobic group in the first cathode active material of Example 1 has a content of 2.7wt%, the hydrophobic group in the first cathode active material of Comparative Example 1 has a content of 0.3wt%, and the hydrophobic group in the first cathode active material of Comparative Example 2 has a content of 5.9wt%.

The weight change rates of the cathode materials of Example 1 and Comparative Examples 1 and 2 are shown below, which were measured by the aforementioned measurement method for the weight change rate.

In Example 1, the NCM material containing a hydrophobic group in the cathode plate has a weight change rate A of 0.35%, and the LMFP material in the cathode plate has a weight change rate B of 0.36%.

In Comparative Example 1, the NCM material containing a hydrophobic group in the cathode plate has a weight change rate A of 0.43%, and the LMFP material in the cathode plate has a weight change rate B of 0.36%.

In Comparative Example 2, the NCM material containing a hydrophobic group in the cathode plate has a weight change rate A of 0.21%, and the LMFP material in the cathode plate has a weight change rate B of 0.36%.

The test method for cycling performance is as follows:
The batteries provided by Example 1, and Comparative Examples 1 and 2 were settled for 1 h at 25°C, then charged to 4.2 V at constant current and constant voltage and at 1 C with a cut-off current of 0.05 C, then settled for 30 min, and discharged to 2.5 V at a constant current at 1 C; the stability of the material was assessed by the cycling capacity retention rate after 500 cycles, and the test results are shown in Table 1.

**Table 1**

| | Example 1 | Comparative Example 1 | Comparative Example 2 |
|---|---|---|---|
| A | 0.35% | 0.43% | 0.21% |
| B | 0.36% | 0.36% | 0.36% |
| Ratio (A/B) | 0.98 | 1.20 | 0.60 |
| Cycling performance | 93.70% | 91.80% | 92.60% |

As can be seen from Table 1, in Example 1, the ratio (A/B) of the weight change rate A of the first cathode active material and the weight change rate B of the second cathode active material satisfies the requirement of 0.95 ≤ A/B ≤ 1.05; the content of the hydrophobic group in the first cathode active material is overly low in Comparative Example 1, and the content of the hydrophobic group in the first cathode active material is overly high in Comparative Example 2, which leads to the ratios (A/B) of the weight change rate A of the first cathode active material and the weight change rate B of the second cathode active material in Comparative Examples 1 and 2 both not satisfy the requirement of 0.95 ≤ A/B ≤ 1.05.

As can be seen from Table 1, in a case where the ratio (A/B) of the weight change rate A of the first cathode active material (the NCM material containing a hydrophobic group) and the weight change rate B of the second cathode active material (the LMFP material) satisfies the requirement of 0.95 ≤ A/B ≤ 1.05, the battery has the best cycling performance. In addition, in a case where the sensitivity of NCM material to moisture is overly high or overly low, the cycling performance of the battery tends to be poor. Because no matter what the sensitivity of NCM material to moisture is (overly high or overly low), with the presence of water, the NCM material will undergo a redox reaction partially, changing the crystal structure of NCM material or LMFP material, thus affecting the intercalation and de-intercalation ability of lithium ions. When the NCM material and LMFP material have different degree of damage caused by the redox reaction, the intercalation and de-intercalation of lithium ions tend to occur in the material with less damage. From a perspective of the material level, one of the materials (e.g., the LMFP material) is charged and discharged deeply, while the other material (e.g., the NCM material) is charged and discharged shallowly; with the cycle increases, such charge/discharge difference becomes more obvious, resulting in a deterioration of the electrochemical stability of the material, in turn leading to a further deterioration of the battery's cycling performance.

Therefore, the introduction of the hydrophobic group improves the hydrophobicity of the material, making the material more stable in humid conditions; the introduction of an appropriate hydrophobic group can improve the conductivity and stability of the material; by adjusting the sensitivity of NCM material and LMFP material to moisture to a comparable level, the electrochemical stability can be improved, which is conducive to improving the cycling performance of the battery.

The embodiments of the present application are described in detail above, and the principle and embodiments of the present application are elaborated in the present application by specific examples, and the description of the above embodiments is merely used to understand the method and core idea of the present application; at the same time, for those skilled in the art, there will be changes in the specific embodiment and application scope according to the idea of the present application; in summary, the contents of the specification should not be construed as a restriction on the present application.

## Claims

1. A cathode composite material, which comprises a first cathode active material and a second cathode active material, wherein the first cathode active material comprises a ternary material and a hydrophobic group, and the hydrophobic group is connected to the ternary material through a chemical bond;
wherein, in the same humidity condition, a ratio of a weight change rate of the first cathode active material to a weight change rate of the second cathode active material is more than or equal to 0.95 and less than or equal to 1.05.

2. The cathode composite material according to claim 1, wherein the hydrophobic group comprises at least one of a hydrocarbon group, a fatty acid group, an aromatic group, and a halogenated hydrocarbon group.

3. The cathode composite material according to claim 2, wherein the hydrophobic group is selected from an oleic acid group.

4. The cathode composite material according to claim 1, wherein the hydrophobic group has a mass fraction ranging from 0.5% to 5% in the first cathode active material.

5. The cathode composite material according to claim 1, wherein the cathode composite material further comprises a conductive agent and a binder;
in the cathode composite material, a sum of mass fractions of the first cathode active material and the second cathode active material ranges from 94.5% to 97%, a mass fraction of the conductive agent ranges from 1.5% to 3%, and a mass fraction of the binder ranges from 1.5% to 2.5%.

6. The cathode composite material according to any one of claims 1-5, wherein the ternary material comprises a nickel-cobalt-manganese material and the second cathode active material comprises a lithium manganese iron phosphate material.

7. A preparation method for a cathode composite material, which comprises:
forming a hydrophobic group on a ternary material to obtain a first cathode active material, wherein the hydrophobic group is connected to the ternary material through a chemical bond; and
mixing at least the first cathode active material and a second cathode active material to obtain the cathode composite material; wherein, in the same humidity condition, a ratio of a weight change rate of the first cathode active material to a weight change rate of the second cathode active material is more than or equal to 0.95 and less than or equal to 1.05.

8. The preparation method for the cathode composite material according to claim 7, wherein the process of "forming the hydrophobic group on the ternary material to obtain the first cathode active material" comprises:
mixing and dissolving a nickel source, a cobalt source, and a manganese source according to a preset ratio to obtain a mixed salt solution, adding a precipitant to the mixed salt solution and stirring evenly at a first preset temperature, adding a complexant to the mixed solution during the stirring process, allowing to stand and then washing and removing impurities to obtain a ternary material precursor; wherein at least one of the nickel source, the cobalt source and the manganese source is connected with the hydrophobic group through a chemical bond; and
drying the ternary material precursor at a second preset temperature, and then calcinating the ternary material precursor at a third preset temperature to obtain the first cathode active material;
wherein the nickel source is selected from nickel oleate, the cobalt source is selected from cobaltous nitrate, and the masnganese source is selected from cobalt sulfate; the nickel source has a mass fraction ranging from 50% to 80%, the cobalt source has a mass fraction ranging from 10% to 20%, and the manganese source has a mass fraction ranging from 10% to 30%.

9. A cathode plate, which comprises a cathode current collector and a cathode active layer disposed on at least one side of the cathode current collector, wherein a material of the cathode active layer comprises the cathode composite material according to any one of claims 1-6.

10. A battery, which comprises the cathode plate according to claim 9.
